# EUROPEAN PATENT APPLICATION

(11) **EP 4 657 599 A1**
(43) Date of publication of application: **03.12.2025**
(21) Application number: 23943327.9
(22) Date of filing: 24.11.2023
(51) Int. Cl.: H01M 10/42, H02J 7/00

(54) **EQUALIZATION CONTROL METHOD AND APPARATUS FOR POWER BATTERY, VEHICLE, AND STORAGE MEDIUM**

(30) Priority: 25.06.2023 CN 202310753306
(71) Applicant: Voyah Automobile Technology Company Ltd., Wuhan, Hubei 430050 (CN)
(72) Inventor: YU, Zhenhong, Wuhan, Hubei 430050 (CN); DONG, Chunming, Wuhan, Hubei 430050 (CN); HUANG, Min, Wuhan, Hubei 430050 (CN); HUANG, Bo, Wuhan, Hubei 430050 (CN); LIU, Zhenyong, Wuhan, Hubei 430050 (CN); BIAN, Ziyong, Wuhan, Hubei 430050 (CN); XIONG, Wei, Wuhan, Hubei 430050 (CN); WANG, Guan, Wuhan, Hubei 430050 (CN); WU, Zhanling, Wuhan, Hubei 430050 (CN); FENG, Shaohu, Wuhan, Hubei 430050 (CN)
(74) Representative: Boult Wade Tennant LLP
(86) International application number: PCT/CN2023/133914
(87) International publication number: WO 2025/000851

(57) **Abstract**

The present disclosure provides an equalization control method and apparatus for a power battery, vehicle, and storage medium, the method includes: determining battery cells to be equalized that meet an equalization enabling condition in a battery pack; determining a target battery cell from the battery cells to be equalized; adjusting a number of the battery cells to be equalized based on the temperature of an equalization board area where the target battery cell is located and a position of the target battery cell in the battery pack, to obtain a target battery cell to be equalized; performing equalization on the target battery cell to be equalized.

## Description

This application claims priority to Chinese Patent Application No. 202310753306.3, filed on June 25, 2023, which is hereby incorporated by reference in its entirety.

### TECHNICAL FIELD

The present disclosure relates to the field of power battery equalization technology and, in particular, to an equalization control method and apparatus for a power battery, a vehicle, and a storage medium.

### BACKGROUND

A power battery contains multiple battery modules, and one battery module contains multiple groups of battery cells. During the use of power batteries, there are differences in capacity, internal resistance, self-discharge rates, charge and discharge efficiencies, etc. of battery cells, which cause inconsistent voltages of each battery cell, and thus causing a decrease in the lifespan and endurance time power battery.

In order to protect battery cells of batteries, it is necessary to carry out equalization processing on the battery cells of the batteries. In related technologies, a battery cell equalization method is usually implemented using an odd-even split equalization control algorithm. On the surface, this equalization method seems to have a high equalization efficiency, as all battery cells can be turned on for equalization. However, when too many battery cells need to be turned on for equalization, the temperature of the equalization board used to load the battery pack will rise very high, therefore, the equalization has to be turned off in advance, which actually leads to a relatively low overall equalization efficiency.

### SUMMARY

The present disclosure provides an equalization control method and apparatus for a power battery, a vehicle, and a storage medium to solve or partially solve the technical problem of low equalization efficiency in the prior art when performing equalization on a battery.

In a first aspect, an equalization control method for a power battery is provided, where the method includes: determining battery cells to be equalized that meet an equalization enabling condition in a battery pack; determining a target battery cell from the battery cells to be equalized, where the target battery cell is a battery cell corresponding to the highest cell voltage among the battery cells to be equalized; adjusting a number of the battery cells to be equalized based on the temperature of an equalization board area where the target battery cell is located and a position of the target battery cell in the battery pack, to obtain a target battery cell to be equalized; and performing equalization on the target battery cell to be equalized.

In a second aspect, an equalization control apparatus for a power battery is provided, where the apparatus includes: a first determining unit, configured to determine battery cells to be equalized that meet an equalization enabling condition in a battery pack; a second determining unit, configured to determine a target battery cell from the battery cells to be equalized, where the target battery cell is a battery cell corresponding to the highest cell voltage among the battery cells to be equalized; an adjusting unit, configured to adjust a number of the battery cells to be equalized based on the temperature of an equalization board area where the target battery cell is located and a position of the target battery cell in the battery pack, to obtain a target battery cell to be equalized; and a equalization unit, configured to perform equalization on the target battery cell to be equalized.

In a third aspect of the present disclosure, a vehicle is provided, where the vehicle includes the equalization control apparatus for a power battery according to any one of the second aspects.

In a fourth aspect of the present disclosure, a computer-readable storage medium is provided, where the storage medium stores a computer program which, when executed by a processor, implements steps of the above-mentioned equalization control method for a power battery.

### BRIEF DESCRIPTION OF DRAWINGS

FIG. 1 shows a schematic structural diagram of a battery pack equalization circuit according to some embodiments of the present disclosure.
FIG. 2 shows a schematic flow chart of an equalization control method for a power battery according to some embodiments of the present disclosure.
FIG. 3 shows a schematic structural diagram of an equalization control apparatus for a power battery according to some embodiments of the present disclosure.

### DESCRIPTION OF EMBODIMENTS

The exemplary embodiments of the present disclosure will be described in more detail below with reference to the accompanying drawings. Although the accompanying drawings show exemplary embodiments of the present disclosure, it should be understood that the present disclosure can be implemented in various forms and should not be limited by the embodiments described here. On the contrary, these embodiments are provided to enable a more thorough understanding of the present disclosure and to convey the complete scope of the present disclosure to those skilled in the art.

To better understand the technical solution of the present disclosure, the structure of a battery pack equalization circuit is first introduced here. As mentioned above, a battery pack contains multiple battery cells. An equalization board is installed inside the battery pack and is mainly used to perform equalization on the voltage of the battery cells. However, due to a limited size of the equalization board (generally speaking, one equalization board can equalize up to 12 cells at most), if the number of battery cells in the battery pack is large, multiple equalization boards need to be set up accordingly.

The equalization board includes multiple equalization circuits, and each equalization circuit corresponds to one battery cell. The equalization circuits are mainly used to perform equalization on the battery cells, and the structures of each equalization circuit are the same.

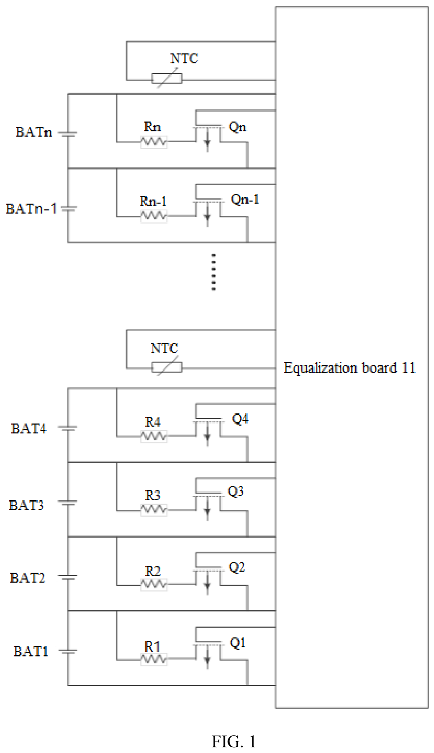

As shown in FIG. 1, an example of one equalization board 11 is given, on which n battery cells (respectively BAT1 to BATn, where n can be 12) are mounted. Taking the battery cell BAT1 as an example for illustration, the equalization circuit of the battery cell BAT1 includes the resistor R1 and the MOS tube Q1. Among them, the equalization board can be composed of a battery sampling chip (AFE, Analog Front End) and peripheral circuits, and the turning on and turning off of the equalization of each battery cell is controlled by the AFE.

As the essence of the equalization strategy in the present disclosure is to dynamically adjust a number of battery cells to be equalized based on the temperature of an equalization board area where the target battery cell is located and a position of the target battery cell in the battery pack. Therefore, referring to FIG. 1, a temperature sensor NTC (Negative Temperature Coefficient) is also installed on the equalization board of the present disclosure. One temperature sensor NTC is for collecting the temperature of the equalization board area where four battery cells are located. If 12 battery cells are installed on one equalization board, then, three NTCs need to be set on one equalization board. Among them, the target battery cell is a battery cell corresponding to the highest cell voltage among the battery cells to be equalized.

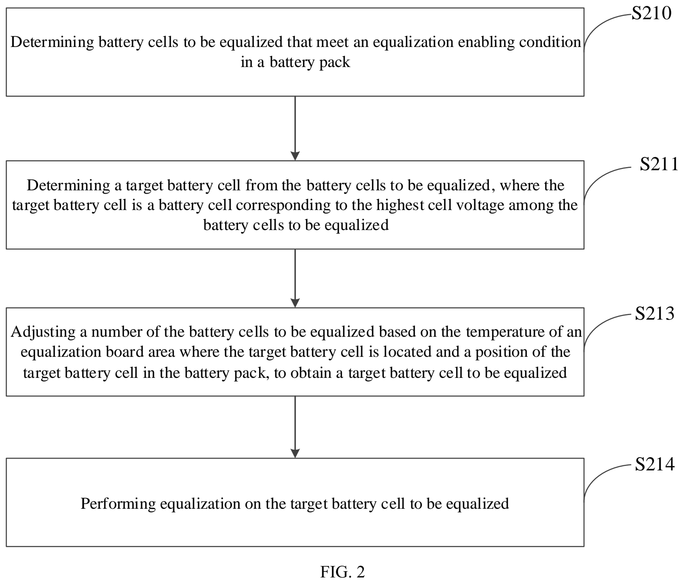

Based on the above-mentioned equalization control circuit, the present disclosure provides an equalization control method for a power battery. The implementation of this method will be elaborated in detail in the following embodiments. As shown in FIG. 2, the equalization control method for a power battery mainly includes steps S210 to S213.

In step S210, determining battery cells to be equalized that meet an equalization enabling condition in a battery pack.

In an implementation, the determining the battery cells to be equalized that meet an equalization enabling condition includes: obtaining all effective cell voltages and a minimum effective cell voltage in the battery pack during a charging and discharging process (when the battery management system (BMS) is working); traversing all the effective cell voltages, and determining battery cells corresponding to the effective cell voltages as the battery cells to be equalized that meet the equalization enabling condition when the effective cell voltages are greater than a preset first voltage threshold and a voltage difference between the effective cell voltages and the minimum effective cell voltage is greater than a second voltage threshold.

In an implementation, the obtaining all the effective cell voltages in the battery pack includes: obtaining a voltage value of each battery cell; and for any battery cell, if a voltage value of a battery cell is within an effective voltage range, determining the voltage value of the battery cell as the effective cell voltage.

The battery pack contains many battery cells, and each battery cell has a unique position number within the battery pack. During a charging process, each battery cell in the battery pack has a corresponding voltage, but some voltages are valid and some are invalid. In the embodiments of the present disclosure, it is necessary to obtain all the effective cell voltages in the battery pack.

In some embodiments, the effective voltage range is [2000mv, 4000mv]. For a voltage of any battery cell, a voltage that meets the effective voltage range is called the effective cell voltage, and a voltage that exceed the effective voltage range is called an invalid cell voltage.

In some embodiments, if a voltage of a certain battery cell is 3000mv, it indicates that the voltage of this battery cell is the effective cell voltage. If a voltage of a certain battery cell is 1500mv or 4500mv, it indicates that the voltage of this battery cell is the invalid cell voltage.

After all the effective cell voltages are obtained, a smallest effective cell voltage is determined from all the effective cell voltages and denoted as Vmin. All the effective cell voltages are traversed. For any effective cell voltage Vi, if it is determined that Vi>Vt and Vi-Vmin>△Vt, it indicates that the battery cell with the number i meets the equalization enabling condition. Among them, Vt is the first voltage threshold, and △Vt is the second voltage threshold. The first voltage threshold and the second voltage threshold are pre-set based on the voltage characteristics of battery cells and are not restricted here.

In some embodiments, assuming that a voltage operating range of a battery cell is 2 to 4.4v, then the first voltage threshold Vt can be 3.5 to 3.7v; and the second voltage threshold △Vt can be 0.02 to 0.04v, for instance, △Vt can be 0.03v.

Assuming that the effective cell voltage Vi of a certain battery cell i is 3.7v, the first voltage threshold is 3.5v, the minimum effective cell voltage is 3.6v, and the second voltage threshold is 0.02v. Then, since Vi >3.5 and Vi-Vmin >0.02, it indicates that the battery cell i is the battery cell to be equalized that meets the equalization enabling condition.

In this way, all battery cells to be equalized that meet the equalization enabling condition in the battery pack can be determined. As mentioned above, each battery cell in the battery pack has a corresponding position number. After all the battery cells to be equalized are determined, the position numbers of all the battery cells to be equalized can be obtained in the battery pack to determine a corresponding sequence of the battery cells to be equalized.

In some embodiments, assuming that the battery cells to be equalized in the battery pack are: A1, A3, A6, A9, A11, A12, A15, A16, A18, A20, A23.

The position numbers of the battery cells to be equalized in the battery pack are: b1, b3, b6, b9, b11, b12, b15, b16, b18, b20, b23.

Then the sequence of the battery cells to be equalized can be (b1, b3, b6, b9, b11, b12, b15, b16, b18, b20, b23).

In some embodiments, the sequence of the battery cells to be equalized is determined. Subsequently, when dynamically adjusting a number of the battery cells to be equalized, auxiliary judgments can be made based on the sequence of the battery cells to be equalized, thereby increasing an equalization rate.

In step S211, determining a target battery cell from the battery cells to be equalized, where the target battery cell is a battery cell corresponding to the highest cell voltage among the battery cells to be equalized.

After the battery cells to be equalized are determined, it is also necessary to determine the target battery cell from the battery cells to be equalized. The target battery cell is a battery cell to be equalized corresponding to the highest cell voltage among the battery cells to be equalized. For instance, assuming that the voltage of battery cell A11 is the highest among the above battery cells to be equalized, then the battery cell A11 is the target battery cell.

In step S212, adjusting a number of the battery cells to be equalized based on the temperature of an equalization board area where the target battery cell is located and a position of the target battery cell in the battery pack, to obtain a target battery cell to be equalized.

As mentioned above, when a number of the battery cells to be equalized is large, by using an odd-even split equalization control algorithm, the temperature of the equalization board used to load the battery pack will rise very high, so the equalization has to be turned off in advance in sometimes, resulting in a relatively low equalization efficiency
The key point of the present disclosure to improve the equalization efficiency is to, within an allowable range of the temperature rise of the equalization board, maintain the consistency of voltages of each battery cell in the shortest time. Therefore, the control objective of the present disclosure is to ensure that the target battery cell corresponding to the highest cell voltage can always be equalized at the maximum efficiency throughout the entire process. To prevent the equalization algorithm from being prematurely shut down, it is necessary to dynamically monitor the temperature of the equalization board area where the target battery cell is located. Based on this temperature and the position of the target battery cell, the number of battery cells to be equalized around the target battery cell is dynamically adjusted to ensure that the temperature rise of the equalization board is within the allowable range, thereby reducing the voltage of the target battery cell at the fastest speed and improving the equalization efficiency.

It should be noted that when the temperature in the equalization board area where the target battery cell is located is different, the corresponding equalization strategy is also different. The temperature in the equalization board area where the target battery cell is located can be collected by a corresponding temperature sensor.

In an implementation, the adjusting the number of the battery cells to be equalized based on the temperature of the equalization board area where the target battery cell is located and the position of the target battery cell in the battery pack includes:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, where one temperature sensor corresponds to one battery cell group, and the target equalization board is an equalization board where the target battery cell is located;
obtaining a current sequence number of the target battery cell in the target battery cell group, when determining that the temperature of the equalization board area where the target battery cell is located is greater than or equal to a first temperature threshold and is less than a second temperature threshold;
turning off equalization of a battery cell corresponding to a fourth sequence number in the target battery cell group, when determining that the current sequence number is a first sequence number and the battery cell corresponding to the fourth sequence number in the target battery cell group is in the sequence of the battery cells to be equalized;
turning off equalization of a battery cell corresponding to the first sequence number in the target battery cell group, when determining that the current sequence number is the fourth sequence number and the battery cell corresponding to the first sequence number in the target battery cell group is in the sequence of the battery cells to be equalized.

As can be seen from the above, in some embodiments, only 12 battery cells can be installed on one equalization board, and one equalization board is installed with 3 temperature sensors, and one temperature sensor corresponds to 4 battery cells. In order to accurately adjust the number of battery cells to be equalized, for the battery cells on any equalization board, it is necessary to group the position numbers of all battery cells installed on the equalization board based on the temperature sensor numbers.

Taking an example of an equalization board with battery cells A1 to A12 installed for illustration, if battery cells corresponding to a first temperature sensor on this equalization board are A1 to A4, the position numbers of the battery cells corresponding to the first temperature sensor are (b1 to b4); if battery cells corresponding to a second temperature sensor are A5 to A8, the position numbers of the battery cells corresponding to the second temperature sensor are (b5 to b8); and if battery cells corresponding to a third temperature sensor are A9 to A12, the position numbers of the battery cells corresponding to the second temperature sensor are (b9 to b12).

The present disclosure determines the position of the target battery cell in the battery pack, mainly by determining the position of the target battery cell in the target battery cell group and setting the current sequence number of the target battery cell in the target battery cell group as bmax. Assuming that the target battery cell is A11, then the target battery cell group is a third battery cell group. If the target battery cell is A11, the target battery cell group actually includes four battery cells: A9 to A12. A9 is the battery cell with the first sequence number in the target battery cell group, A10 is the battery cell with the second sequence number in the target battery cell group, A11 is the battery cell with the third sequence number in the target battery cell group which means that the current sequence number of the target battery cell in the target battery cell group is 3 and bmax=3, and A12 is the battery cell with the fourth sequence number in the target battery cell group.

Since the target battery cell belongs to the third cell group, the temperature in the equalization board area where the target battery cell is located is the temperature collected by the third temperature sensor. If the temperature in the equalization board area where the target battery cell is located is greater than or equal to the first temperature threshold but is less than the second temperature threshold, and bmax=1, it is determined whether a battery cell corresponding to bmax+3 is in the sequence of the battery cells to be equalized. If it is in the sequence of the battery cells to be equalized, the equalization of the battery cell with the sequence number bmax+3 is turned off.

It should be noted that if the battery cell corresponding to bmax+3 is not in the sequence of the battery cells to be equalized at this time, no action needs to be performed.

In some embodiments, assuming that A9 in the third battery cell group is the target battery cell, and bmax=1 at this time, if A12 is in the sequence of the battery cells to be equalized, the equalization of the battery cell A12 is turned off, and if A12 is not in the sequence of the battery cells to be equalized, no action will be performed.

If the temperature in the equalization board area where the target battery cell is located is greater than or equal to the first temperature threshold and is and is less than the second temperature threshold, and bmax=2, the equalization of any cell in this cell group will not be turned off.

If the temperature in the equalization board area where the target battery cell is located is greater than or equal to the first temperature threshold and isand is less than the second temperature threshold, and bmax=3, the equalization of any cell in this cell group will not be turned off.

If the temperature in the equalization board area where the target battery cell is located is greater than or equal to the first temperature threshold and is and is less than the second temperature threshold, and bmax=4, it is determined whether a battery cell corresponding to bmax-3 is in the sequence of the battery cells to be equalized. If it is in the sequence of the battery cells to be equalized, the equalization of the battery cell with the sequence number bmax-3 is turned off.

In some embodiments, assuming that A12 in the third battery cell group is the target battery cell, and bmax=4 at this time, if A9 is in the sequence of the battery cells to be equalized, the equalization of the battery cell A9 is turned off, and if A9 is not in the sequence of the battery cells to be equalized, no action will be performed.

In some embodiments, the first temperature threshold can be Tthreshold-6°C, and the second temperature threshold can be Tthreshold-4 °C. The Tthreshold is a preset fourth temperature threshold, with a value range of 80 to 90°C. For example, the Tthreshold is 85°C.

In an implementation, the adjusting the number of the battery cells to be equalized based on the temperature of the equalization board area where the target battery cell is located and the position of the target battery cell in the battery pack includes:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, where one temperature sensor corresponds to one battery cell group;
obtaining a current sequence number of the target battery cell in the target battery cell group, when determining that the temperature of the equalization board area where the target battery cell is located is greater than or equal to a second temperature threshold and is less than a third temperature threshold;
turning off equalization of a battery cell corresponding to a third sequence number in the target battery cell group, when determining that the current sequence number is a first sequence number and the battery cell corresponding to the third sequence number in the target battery cell group is in the sequence of the battery cells to be equalized;
turning off equalization of a battery cell corresponding to a fourth sequence number in the target battery cell group, when determining that the current sequence number is a second sequence number and the battery cell corresponding to the fourth sequence number in the target battery cell group is in the sequence of the battery cells to be equalized;
turning off equalization of a battery cell corresponding to the first sequence number in the target battery cell group, when determining that the current sequence number is the third sequence number and the battery cell corresponding to the first sequence number in the target battery cell group is in the sequence of the battery cells to be equalized;
turning off equalization of a battery cell corresponding to the second sequence number in the target battery cell group, when determining that the current sequence number is the fourth sequence number and the battery cell corresponding to the second sequence number in the target battery cell group is in the sequence of the battery cells to be equalized.

The specific implementation for determining the sequence of the battery cells to be equalized, grouping the position numbers of all the battery cells installed on the target equalization board, and determining the target battery cell group where the target battery cell is located can be referred to the above description, which will not be repeated here.

In some embodiments, if the temperature in the equalization board area where the target battery cell is located is greater than or equal to the second temperature threshold and is less than the third temperature threshold, and bmax=1, it is determined whether the battery cell corresponding to bmax+2 is in the sequence of the battery cells to be equalized. If it is in the sequence of the battery cells to be equalized, the equalization of the battery cell with the sequence number bmax+2 is turned off.

In some embodiments, assuming that A9 in the third battery cell group is the target battery cell, and bmax=1 at this time, if A11 is in the sequence of the battery cells to be equalized, the equalization of the battery cell A11 is turned off, and if A11 is not in the sequence of the battery cells to be equalized, no action will be performed.

If the temperature in the equalization board area where the target battery cell is located is greater than or equal to the second temperature threshold and is less than the third temperature threshold, and bmax=2, it is determined whether the battery cell corresponding to bmax+2 is in the sequence of the battery cells to be equalized. If it is in the sequence of the battery cells to be equalized, the equalization of the battery cell with the sequence number bmax+2 is turned off.

In some embodiments, assuming that A10 in the third battery cell group is the target battery cell, and bmax=2 at this time, if A12 is in the sequence of the battery cells to be equalized, the equalization of the battery cell A12 is turned off, and if A12 is not in the sequence of the battery cells to be equalized, no action will be performed.

If the temperature in the equalization board area where the target battery cell is located is greater than or equal to the second temperature threshold and is less than the third temperature threshold, and bmax=3, it is determined whether the battery cell corresponding to bmax-2 is in the sequence of the battery cells to be equalized. If it is in the sequence of the battery cells to be equalized, the equalization of the battery cell with the sequence number bmax-2 is turned off.

In some embodiments, assuming that A11 in the third battery cell group is the target battery cell, and bmax=3 at this time, if A9 is in the sequence of the battery cells to be equalized, the equalization of the battery cell A9 is turned off, and if A9 is not in the sequence of the battery cells to be equalized, no action will be performed.

If the temperature in the equalization board area where the target battery cell is located is greater than or equal to the second temperature threshold and is less than the third temperature threshold, and bmax=4, it is determined whether the battery cell corresponding to bmax-2 is in the sequence of the battery cells to be equalized. If it is in the sequence of the battery cells to be equalized, the equalization of the battery cell with the sequence number bmax-2 is turned off.

In some embodiments, assuming that A12 in the third battery cell group is the target battery cell, and bmax=4 at this time, if A10 is in the sequence of the battery cells to be equalized, the equalization of the battery cell A10 is turned off, and if A10 is not in the sequence of the battery cells to be equalized, no action will be performed.

In some embodiments, the third temperature threshold can be Tthreshold-2°C, where the Tthreshold is a preset fourth temperature threshold, with a value range of 80 to 90°C. For example, the Tthreshold is 85°C.

In an implementation, the adjusting the number of the battery cells to be equalized based on the temperature of the equalization board area where the target battery cell is located and the position of the target battery cell in the battery pack includes:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, where one temperature sensor corresponds to one battery cell group;
obtaining a current sequence number of the target battery cell in the target battery cell group, when determining that the temperature of the equalization board area where the target battery cell is located is greater than or equal to a third temperature threshold and is less than a fourth temperature threshold;
turning off equalization of a battery cell corresponding to a second sequence number in the target battery cell group, when determining that the current sequence number is a first sequence number and the battery cell corresponding to the second sequence number in the target battery cell group is in the sequence of the battery cells to be equalized;
turning off equalization of a battery cell corresponding to the first sequence number and a battery cell corresponding to the second sequence number in the target battery cell group, when determining that the current sequence number is the second sequence number, and the battery cell corresponding to the first sequence number and the battery cell corresponding to the second sequence number in the target battery cell group is in the sequence of the battery cells to be equalized;
turning off equalization of a battery cell corresponding to the second sequence number and a battery cell corresponding to a fourth sequence number in the target battery cell group, when determining that the current sequence number is a third sequence number, and the battery cell corresponding to the second sequence number and the battery cell corresponding to the fourth sequence number in the target battery cell group is in the sequence of the battery cells to be equalized;
turning off equalization of a battery cell corresponding to the second sequence number in the target battery cell group, when determining that the current sequence number is the fourth sequence number and the battery cell corresponding to the second sequence number in the target battery cell group is in the sequence of the battery cells to be equalized.

The specific implementation for determining the sequence of the battery cells to be equalized, grouping the position numbers of all the battery cells installed on the target equalization board, and determining the target battery cell group where the target battery cell is located can be referred to the above description, which will not be repeated here.

In some embodiments, if the temperature in the equalization board area where the target battery cell is located is greater than or equal to the third temperature threshold and is less than the fourth temperature threshold, and bmax=1, it is determined whether the battery cell corresponding to bmax+1 is in the sequence of the battery cells to be equalized. If it is in the sequence of the battery cells to be equalized, the equalization of the battery cell with the sequence number bmax+1 is turned off.

In some embodiments, assuming that A9 in the third battery cell group is the target battery cell, and bmax=1 at this time, if A10 is in the sequence of the battery cells to be equalized, the equalization of the battery cell A10 is turned off, and if A10 is not in the sequence of the battery cells to be equalized, no action will be performed.

If the temperature in the equalization board area where the target battery cell is located is greater than or equal to the third temperature threshold and is less than the fourth temperature threshold, and bmax=2, it is determined whether the battery cell corresponding to bmax+1 and the battery cell corresponding to bmax-1 are in the sequence of the battery cells to be equalized. If the battery cell corresponding to bmax+1 and the battery cell corresponding to bmax-1 are in the sequence of the battery cells to be equalized, the equalization of the battery cell with the sequence number bmax+1 and the battery cell with the sequence number bmax-1 is turned off.

In some embodiments, assuming that A10 in the third battery cell group is the target battery cell, and bmax=2 at this time, if A9 is in the sequence of the battery cells to be equalized and A11 is not in the sequence of the battery cells to be equalized, the equalization of the battery cell A9 is turned off and no action is performed for A11, if A9 is also not in the sequence of the battery cells to be equalized, no action is performed for A9, and if A9 and A11 are in the sequence of the battery cells to be equalized, the equalization of the battery cells A9 and A11 is turned off.

If the temperature in the equalization board area where the target battery cell is located is greater than or equal to the third temperature threshold and is less than the fourth temperature threshold, and bmax=3, it is determined whether the battery cell corresponding to bmax+1 and the battery cell corresponding to bmax-1 are in the sequence of the battery cells to be equalized. If they are in the sequence of the battery cells to be equalized, the equalization of the battery cell with the sequence number bmax+1 and the battery cell with the sequence number bmax-1 is turned off.

In some embodiments, assuming that A11 in the third battery cell group is the target battery cell, and bmax=3 at this time, if A12 is in the sequence of the battery cells to be equalized and A10 is not in the sequence of the battery cells to be equalized, the equalization of the battery cell A12 is turned off and no action is performed for A10, and if A12 is also not in the sequence of the battery cells to be equalized, no action is performed for A12.

If the temperature in the equalization board area where the target battery cell is located is greater than or equal to the third temperature threshold and is less than the fourth temperature threshold, and bmax=4, it is determined whether the battery cell corresponding to bmax-1 is in the sequence of the battery cells to be equalized. If it is in the sequence of the battery cells to be equalized, the equalization of the battery cell with the sequence number bmax-1 is turned off.

In some embodiments, assuming that A12 in the third battery cell group is the target battery cell, and bmax=4 at this time, if A12 is in the sequence of the battery cells to be equalized, the equalization of the battery cell A11 is turned off, and if A11 is not in the sequence of the battery cells to be equalized, no action will be performed.

In an implementation, the adjusting the number of the battery cells to be equalized based on the temperature of the equalization board area where the target battery cell is located and the position of the target battery cell in the battery pack includes:
turning off equalization of the target battery cell, when determining that the temperature in the equalization board area where the target battery cell is located is greater than a fourth temperature threshold.

In some embodiments, if the temperature in the equalization board area where the target battery cell is located is greater than or equal to a fourth temperature threshold, the equalization of the target battery cell is directly turned off, so as to prevent damage to the battery cell.

The fourth temperature threshold is Tthreshold, with a value range of 80 to 90 °C. In some embodiments, the Tthreshold is 85°C.

In this way, the number of the battery cells to be equalized can be dynamically adjusted in real time based on the temperature of the equalization board area where the target battery cell is located and the position of the target battery cell, and the final target battery cells to be equalized that needs to be equalized can be determined. By reducing the number of the battery cells to be equalized around the target battery cell corresponding to the highest cell voltage, the temperature rise in the equalization board area where the target battery cell is located can be lowered, thus, the voltage of the target battery cell can be reduced in the shortest time. By continuously and cyclically executing the above strategy, the consistency of the voltage of each battery cell can be maintained as quickly as possible from a time dimension.

Step S213, performing equalization on the target battery cell to be equalized.

After the target battery cell to be equalized is determined, the preset equalization strategy can be used to perform equalization on the target battery cell to be equalized.

It should be noted that during the charging and discharging process of the battery pack, the voltage of each battery cell is constantly changing. To improve the accuracy of equalization, the equalization control method provided in the present disclosure needs to be cyclically executed. For instance, after the first equalization of certain battery cells to be equalized is completed, the above steps S210 to S213 need to be carried out for the second time until all the battery cells to be equalized have been completely equalized. Among them, the interval between two executions can be 10ms, that is, the above steps S210 to S213 need to be executed once every 10ms interval.

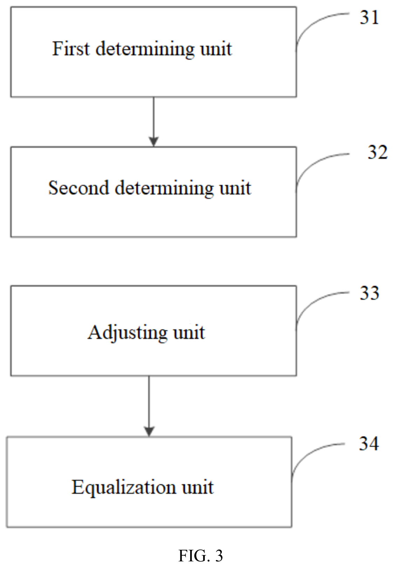

Based on the same inventive concept as that in the aforementioned embodiment, the present disclosure further provides an equalization control apparatus for a power battery, as shown in FIG. 3, the apparatus includes:
a first determining unit 31, configured to determine battery cells to be equalized that meet an equalization enabling condition in a battery pack;
a second determining unit 32, configured to determine a target battery cell from the battery cells to be equalized, where the target battery cell is a battery cell corresponding to the highest cell voltage among the battery cells to be equalized;
an adjusting unit 33, configured to adjust a number of the battery cells to be equalized based on the temperature of an equalization board area where the target battery cell is located and a position of the target battery cell in the battery pack, to obtain a target battery cell to be equalized; and
an equalization unit 34, configured to perform equalization on the target battery cell to be equalized.

In an implementation, the first determining unit 31 is configured to:
obtain all effective cell voltages and a minimum effective cell voltage in the battery pack during a charging and discharging process; and
traverse all the effective cell voltages, and determine battery cells corresponding to the effective cell voltages as the battery cells to be equalized that first meet the equalization enabling condition when the effective cell voltages are greater than a preset first voltage threshold and a voltage difference between the effective cell voltages and the minimum effective cell voltage is greater than a second voltage threshold.

In an implementation, the adjusting unit 33 is configured to:
group position numbers of the battery cells based on temperature sensor numbers, and determine a target battery cell group where the target battery cell is located, where one temperature sensor corresponds to one battery cell group;
obtain position numbers of all the battery cells to be equalized in the battery pack to determine a sequence of the battery cells to be equalized;obtain a current sequence number of the target battery cell in the target battery cell group, when determining that the temperature of the equalization board area where the target battery cell is located is greater than or equal to a first temperature threshold and is less than a second temperature threshold;
turn off equalization of a battery cell corresponding to a fourth sequence number in the target battery cell group, when determining that the current sequence number is a first sequence number and the battery cell corresponding to the fourth sequence number in the target battery cell group is in the sequence of the battery cells to be equalized; and
turn off equalization of a battery cell corresponding to the first sequence number in the target battery cell group, when determining that the current sequence number is the fourth sequence number and the battery cell corresponding to the first sequence number in the target battery cell group is in the sequence of the battery cells to be equalized.

As the apparatus introduced in the embodiments of the present disclosure is the equalization control apparatus for a power battery for the implementation of the embodiments of the present disclosure, those skilled in the art can understand the specific structure and deformation of the apparatus based on the method introduced in the embodiments of the present disclosure. Therefore, it will not be repeated here. The apparatus adopted in the methods of the embodiments of the present disclosure fall within the scope intended to be protected by the present disclosure.

Based on the same inventive concept as that in the aforementioned embodiments, the present disclosure also provides a vehicle, where the vehicle includes the equalization control apparatus for a power battery as described above. Among them, the overall structure of the equalization control apparatus for a power battery and the specific equalization strategy thereof can refer to the description above, which will not be repeated here.

The present disclosure also provides a computer program product or a computer program, where the computer program product or the computer program includes computer instructions stored in a computer-readable storage medium. A processor of a computer device reads the computer instructions from the computer-readable storage medium. The processor executes the computer instructions, enabling the computer device to perform the equalization control method for a power battery described in the above embodiments.

The present disclosure also provides a computer-readable medium, where the computer-readable medium can be contained in the electronic device described in the above embodiments, or can exist independently without being assembled into the electronic device. The computer-readable medium mentioned above carries one or more programs. The one or more programs, when executed by the electronic device, enable the electronic device to achieve the equalization control method for a power battery described in the above embodiments.

It should be noted that although several modules or units of the equipment used for action execution have been mentioned in the detailed description above, such division is not mandatory. In fact, according to the implementations of the present disclosure, the features and functions of the two or more modules or units described above can be specified in one module or unit. Conversely, the features and functions of one module or unit described above can be further divided into multiple modules or units for concretization.

Through the description of the above implementations, it is easy for those skilled in the art to understand that the example implementations described here can be implemented through software or by combining software with necessary hardware. Therefore, the technical solutions of the present can be presented in the form of a software product. The software product can be stored in a non-volatile storage medium (such as a CD-ROM, a USB flash drive, a portable hard disk, etc.) or in a network, or includes several instructions to enable a computing device (such as a personal computer, a server, a touch terminal, or a network device, etc.) to execute the equalization control method for a power battery provided in the present disclosure.

Through one or more embodiments of the present disclosure, the present disclosure has the following beneficial effects or advantages.

The present disclosure provides an equalization control method and apparatus for a power battery, a vehicle, and a storage medium, where the method includes: determining battery cells to be equalized that meet an equalization enabling condition in a battery pack; determining a target battery cell from the battery cells to be equalized, where the target battery cell is a battery cell corresponding to the highest cell voltage among the battery cells to be equalized; adjusting a number of the battery cells to be equalized based on the temperature of an equalization board area where the target battery cell is located and a position of the target battery cell in the battery pack, to obtain a target battery cell to be equalized; and performing equalization on the target battery cell to be equalized. In the above-mentioned scheme, when the number of the battery cells to be equalized is large, the number of battery cells to be equalized can be dynamically adjusted based on the temperature of the equalization board area where the battery cell corresponding to the highest cell voltage is located, thus, the temperature rise in the equalization board area where the target battery cell is located can be lowered and the voltage of the target battery cell can be reduced in the shortest time within the allowable temperature range of the equalization board where the target battery cell is located. Measured from the time dimension, the consistency of the voltage of each battery cell can be maintained as quickly as possible, thereby increasing the equalization rate of the battery cells to be equalized.

Although some embodiments of the present disclosure have been described, those skilled in the art can make additional changes and modifications to these embodiments once they are informed of the basic creative concepts. Therefore, the attached claims are intended to be interpreted as including the above embodiments and all changes and modifications falling within the scope of the present disclosure.

The above is merely a preferred embodiment of the present disclosure and is not intended to limit the scope of protection of the present disclosure. Any modifications, equivalent replacements, improvements, and the like which are made within the spirit and principles of the present disclosure should all be included within the scope of protection of the present disclosure.

## Claims

1. An equalization control method for a power battery, comprising:
determining battery cells to be equalized that meet an equalization enabling condition in a battery pack;
determining a target battery cell from the battery cells to be equalized, wherein the target battery cell is a battery cell corresponding to the highest cell voltage among the battery cells to be equalized;
adjusting a number of the battery cells to be equalized based on the temperature of an equalization board area where the target battery cell is located and a position of the target battery cell in the battery pack, to obtain a target battery cell to be equalized; and
performing equalization on the target battery cell to be equalized.

2. The method according to claim 1, wherein the determining the battery cells to be equalized that meet the equalization enabling condition in the battery pack comprises:
obtaining all effective cell voltages and a minimum effective cell voltage in the battery pack during a charging and discharging process; and
traversing all the effective cell voltages, and determining battery cells corresponding to the effective cell voltages as the battery cells to be equalized that meet the equalization enabling condition when the effective cell voltages are greater than a preset first voltage threshold and a voltage difference between the effective cell voltages and the minimum effective cell voltage is greater than a second voltage threshold.

3. The method according to claim 1, wherein the adjusting the number of the battery cells to be equalized based on the temperature of the equalization board area where the target battery cell is located and the position of the target battery cell in the battery pack comprises:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, wherein one temperature sensor corresponds to one battery cell group;
obtaining a current sequence number of the target battery cell in the target battery cell group, when determining that the temperature of the equalization board area where the target battery cell is located is greater than or equal to a first temperature threshold and is less than a second temperature threshold;
turning off equalization of a battery cell corresponding to a fourth sequence number in the target battery cell group, when determining that the current sequence number is a first sequence number and the battery cell corresponding to the fourth sequence number in the target battery cell group is in the sequence of the battery cells to be equalized; and
turning off equalization of a battery cell corresponding to the first sequence number in the target battery cell group, when determining that the current sequence number is the fourth sequence number and the battery cell corresponding to the first sequence number in the target battery cell group is in the sequence of the battery cells to be equalized.

4. The method according to claim 1, wherein the adjusting the number of the battery cells to be equalized based on the temperature of the equalization board area where the target battery cell is located and the position of the target battery cell in the battery pack comprises:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, wherein one temperature sensor corresponds to one battery cell group;
obtaining a current sequence number of the target battery cell in the target battery cell group, when determining that the temperature of the equalization board area where the target battery cell is located is greater than or equal to a second temperature threshold and is less than a third temperature threshold;
turning off equalization of a battery cell corresponding to a third sequence number in the target battery cell group, when determining that the current sequence number is a first sequence number and the battery cell corresponding to the third sequence number in the target battery cell group is in the sequence of the battery cells to be equalized;
turning off equalization of a battery cell corresponding to a fourth sequence number in the target battery cell group, when determining that the current sequence number is a second sequence number and the battery cell corresponding to the fourth sequence number in the target battery cell group is in the sequence of the battery cells to be equalized;
turning off equalization of a battery cell corresponding to the first sequence number in the target battery cell group, when determining that the current sequence number is the third sequence number and the battery cell corresponding to the first sequence number in the target battery cell group is in the sequence of the battery cells to be equalized; and
turning off equalization of a battery cell corresponding to the second sequence number in the target battery cell group, when determining that the current sequence number is the fourth sequence number and the battery cell corresponding to the second sequence number in the target battery cell group is in the sequence of the battery cells to be equalized.

5. The method according to claim 1, wherein the adjusting the number of the battery cells to be equalized based on the temperature of the equalization board area where the target battery cell is located and the position of the target battery cell in the battery pack comprises:
obtaining position numbers of all the battery cells to be equalized in the battery pack to determine a sequence of the battery cells to be equalized;
grouping the position numbers of all the battery cells installed on a target equalization board based on temperature sensor numbers, and determining a target battery cell group where the target battery cell is located, wherein one temperature sensor corresponds to one battery cell group;
obtaining a current sequence number of the target battery cell in the target battery cell group, when determining that the temperature of the equalization board area where the target battery cell is located is greater than or equal to a third temperature threshold and is less than a fourth temperature threshold;
turning off equalization of a battery cell corresponding to a second sequence number in the target battery cell group, when determining that the current sequence number is a first sequence number and the battery cell corresponding to the second sequence number in the target battery cell group is in the sequence of the battery cells to be equalized;
turning off equalization of a battery cell corresponding to the first sequence number and a battery cell corresponding to the second sequence number in the target battery cell group, when determining that the current sequence number is the second sequence number, and the battery cell corresponding to the first sequence number and the battery cell corresponding to the second sequence number in the target battery cell group is in the sequence of the battery cells to be equalized;
turning off equalization of a battery cell corresponding to the second sequence number and a battery cell corresponding to a fourth sequence number in the target battery cell group, when determining that the current sequence number is a third sequence number, and the battery cell corresponding to the second sequence number and the battery cell corresponding to the fourth sequence number in the target battery cell group is in the sequence of the battery cells to be equalized; and
turning off equalization of a battery cell corresponding to the second sequence number in the target battery cell group, when determining that the current sequence number is the fourth sequence number and the battery cell corresponding to the second sequence number in the target battery cell group is in the sequence of the battery cells to be equalized.

6. The method according to claim 1, wherein the adjusting the number of the battery cells to be equalized based on the temperature of the equalization board area where the target battery cell is located and the position of the target battery cell in the battery pack comprises:
turning off equalization of the target battery cell, when determining that the temperature in the equalization board area where the target battery cell is located is greater than a fourth temperature threshold.

7. An equalization control apparatus for a power battery, comprising:
a first determining unit, configured to determine battery cells to be equalized that meet an equalization enabling condition in a battery pack;
a second determining unit, configured to determine a target battery cell from the battery cells to be equalized, wherein the target battery cell is a battery cell corresponding to the highest cell voltage among the battery cells to be equalized;
an adjusting unit, configured to adjust a number of the battery cells to be equalized based on the temperature of an equalization board area where the target battery cell is located and a position of the target battery cell in the battery pack, to obtain a target battery cell to be equalized; and
an equalization unit, configured to perform equalization on the target battery cell to be equalized.

8. The apparatus according to claim 7, wherein the first determining unit is configured to:
obtain all effective cell voltages and a minimum effective cell voltage in the battery pack during a charging and discharging process; and
traverse all the effective cell voltages, and determine battery cells corresponding to the effective cell voltages as the battery cells to be equalized that first meet the equalization enabling condition when the effective cell voltages are greater than a preset first voltage threshold and a voltage difference between the effective cell voltages and the minimum effective cell voltage is greater than a second voltage threshold.

9. The apparatus according to claim 7, wherein the adjusting unit is configured to:
group position numbers of the battery cells based on temperature sensor numbers, and determine a target battery cell group where the target battery cell is located, wherein one temperature sensor corresponds to one battery cell group;
obtain position numbers of all the battery cells to be equalized in the battery pack to determine a sequence of the battery cells to be equalized;
obtain a current sequence number of the target battery cell in the target battery cell group, when determining that the temperature of the equalization board area where the target battery cell is located is greater than or equal to a first temperature threshold and is less than a second temperature threshold;
turn off equalization of a battery cell corresponding to a fourth sequence number in the target battery cell group, when determining that the current sequence number is a first sequence number and the battery cell corresponding to the fourth sequence number in the target battery cell group is in the sequence of the battery cells to be equalized; and
turn off equalization of a battery cell corresponding to the first sequence number in the target battery cell group, when determining that the current sequence number is the fourth sequence number and the battery cell corresponding to the first sequence number in the target battery cell group is in the sequence of the battery cells to be equalized.

10. A vehicle, comprising the equalization control apparatus for a power battery according to any one of claims 7 to 9.

11. A computer-readable storage medium, storing a computer program which, when executed by a processor, implements steps of the method according to any one of claims 1 to 6.
